(19) Europäisches Patentamt
European Patent Office
Office européen des brevets

(11) EP 2 701 224 B1

(12) **EUROPEAN PATENT SPECIFICATION**

(45) Date of publication and mention of the grant of the patent:
**09.03.2016 Bulletin 2016/10**

(21) Application number: **12774093.4**

(22) Date of filing: **17.04.2012**

(51) Int Cl.:
***H01M 8/02*** (2006.01) ***H01M 8/10*** (2006.01)
***C08L 23/16*** (2006.01) *C08K 5/14* (2006.01)

(86) International application number:
**PCT/JP2012/060333**

(87) International publication number:
**WO 2012/144484 (26.10.2012 Gazette 2012/43)**

(54) **ADHESIVE SEALING MEMBER FOR FUEL CELLS**

HAFTDICHTUNGSELEMENT FÜR BRENNSTOFFZELLEN

ÉLÉMENT D'ÉTANCHÉITÉ ADHÉSIF POUR PILES À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.04.2011 JP 2011092159**
**18.04.2011 JP 2011092165**

(43) Date of publication of application:
**26.02.2014 Bulletin 2014/09**

(73) Proprietor: **Sumitomo Riko Company Limited**
**Komaki, Aichi (JP)**

(72) Inventors:
- **YAMAMOTO Kenji**
  **Komaki-shi**
  **Aichi 485-8550 (JP)**
- **KADONO Hideya**
  **Komaki-shi**
  **Aichi 485-8550 (JP)**
- **TANAHASHI Hideaki**
  **Komaki-shi**
  **Aichi 485-8550 (JP)**
- **SHIMIZU Takayuki**
  **Komaki-shi**
  **Aichi 485-8550 (JP)**

(74) Representative: **Müller-Boré & Partner**
**Patentanwälte PartG mbB**
**Friedenheimer Brücke 21**
**80639 München (DE)**

(56) References cited:
**EP-A1- 1 028 145**
**JP-A- 2010 146 781**
**JP-A- 2010 146 781**
**JP-A- 2010 244 690**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 701 224 B1

## Description

### TECHNICAL FIELD

The present invention relates to an adhesive seal member for sealing component members of a fuel cell and more specifically relates to an adhesive seal member having good sealing performance at an extremely low temperature.

### BACKGROUND ART

A fuel cell generating electricity by electrochemical reaction of gases has high power generation efficiency, exhausts clean gas, and has little impact on the environment. In particular, a polymer electrolyte fuel cell can be operated at a relatively low temperature and has a large output density. On this account, the polymer electrolyte fuel cell is expected to be applied to various fields, for example, electric power generation and a power supply for automobiles.

The polymer electrolyte fuel cell includes a cell in which a membrane electrode assembly (MEA) and others are sandwiched by separators, as a power generation unit. The MEA includes a polymer membrane (electrolyte membrane) to be an electrolyte and a pair of electrode catalyst layers (a fuel electrode (anode) catalyst layer and an oxygen electrode (cathode) catalyst layer) that are disposed on both faces of the electrolyte membrane in a thickness direction. On surfaces of the pair of electrode catalyst layers, porous layers are disposed in order to diffuse gas. To the fuel electrode side, a fuel gas such as hydrogen is supplied, and to the oxygen electrode side, an oxidant gas such as oxygen and air is supplied. Electrochemical reaction on a triple phase boundary between the supplied gas, the electrolyte, and the electrode catalyst layer generates electric power. For producing the polymer electrolyte fuel cell, a large number of the cells are stacked to form a cell stack, and the cell stack is clamped with end plates or the like that are disposed on both ends of the cell stack in the cell stacking direction.

The separator includes a flow path of a gas supplied to each electrode and a flow path of a refrigerant for reducing heat generated during power generation. For example, when gases supplied to the respective electrodes are mixed, problems in which, for example, power generation efficiency is reduced are raised. An electrolyte membrane containing water has proton conductivity. Thus, during operation, the electrolyte membrane is required to be maintained in a wet condition. Therefore, in order that a wet condition is maintained in the cell and the mixing of gases and the leakage of gases and a refrigerant are suppressed, it is important to ensure the sealing performance around the MEA and the porous layers and between adjacent separators. As a seal member for sealing such a component member, for example, Patent Documents 1 and 2 disclose a rubber material using ethylene-propylene rubber (EPM), ethylene-propylene-diene rubber (EPDM), or other types of rubber.

#### Related Art Documents

#### Patent Documents

[Patent Document 1] Japanese Patent Application Publication No. 2009-94056 (JP 2009-94056 A)
[Patent Document 2] Japanese Patent Application Publication No. 2010-146781 (JP 2010-146781 A)
[Patent Document 3] Japanese Patent Application Publication No. 2004-150591 (JP 2004-150591 A)
[Patent Document 4] European Patent No. 0315363 specification

### SUMMARY OF THE INVENTION

#### Problem to be Solved by the Invention

As the electrolyte membrane in the polymer electrolyte fuel cell, a polymer membrane such as a perfluorinated sulfonic acid membrane is used. Thus, when a rubber composition is disposed close to the electrolyte membrane and is cross-linked and bonded, consideration must be given so that the electrolyte membrane is not deteriorated by heat during cross-linking. In other words, it is desired to perform the cross-linking and adhesion process of a seal member at a lower temperature and for a shorter period of time.

From this viewpoint, Patent Documents 1 and 2 disclose seal members including rubber compositions that can be cross-linked at a low temperature of 130°C or less for a comparatively short period of time. Hence, the seal member is applicable close to an electrolyte membrane. The seal member also contains an adhesive component. Thus, the seal member can be bonded to a member without using an additional adhesive. However, at an extremely low temperature of about -20°C to -30°C, the rubber elasticity of an EPM or EPDM may be lost. On this account, when a fuel cell is used,

for example, in cold climate areas, it is difficult to ensure desired sealing performance.

In view of such circumstances, the present invention has an object to provide an adhesive seal member for a fuel cell capable of being cross-linked at a low temperature and for a short period of time and having good sealing performance even at an extremely low temperature.

Means for Solving the Problem

In order to solve the problems, an adhesive seal member for a fuel cell of the present invention is characterized by sealing a component member in the fuel cell and by including a cross-linked product of a rubber composition containing components (A) to (D): (A) at least one rubber component selected from ethylene-propylene rubber and ethylene-propylene-diene rubber having an ethylene content of 40% by mass or more and less than 50% by mass, (B) an organic peroxide having a one-hour half-life temperature of 130°C or less, (C) a crosslinking aid, and (D) at least one adhesive component selected from a resorcinol compound and a melamine compound, an aluminate coupling agent, and a silane coupling agent.

In each seal member described in Patent Documents 1 and 2, the ethylene content in the EPM or the EPDM is not considered. In contrast, the adhesive seal member of the present invention limits the ethylene content in the EPM and the EPDM used as the rubber component. An EPM and EPDM having a lower ethylene content are unlikely to be crystallized at an extremely low temperature of about -20°C to -30°C. In other words, in an EPM and EPDM having a low ethylene content, rubber elasticity is unlikely to be lowered even at an extremely low temperature. The adhesive seal member of the present invention uses at least one of an EPM and an EPDM having a small ethylene content of 40% by mass or more and less than 50% by mass as the rubber component. Thus, the adhesive seal member can maintain the rubber elasticity at an extremely low temperature even when the softener is not contained. Therefore, the adhesive seal member of the present invention is excellent in sealing performance even at an extremely low temperature.

The adhesive seal member of the present invention contains the adhesive component (the component (D)). Hence, the adhesive seal member of the present invention can be bonded to a member without using an additional adhesive. For example, when a resorcinol compound and a melamine compound are contained as the adhesive component, the melamine compound serves as a methylene donor and the resorcinol compound serves as a methylene acceptor. During cross-linking, the donation of a methylene group leads to the formation of each chemical bond between the resorcinol compound and the rubber component and between the resorcinol compound and a member intended to be bonded. By such a reaction, the rubber component (adhesive seal member) and the member are bonded. When an aluminate coupling agent is contained as the adhesive component, the adhesive seal member and a member are bonded through the aluminate coupling agent. In a similar manner, when a silane coupling agent is contained as the adhesive component, the adhesive seal member and a member are bonded through the silane coupling agent.

These adhesive components have a large adhesive strength. In addition, the adhesive strength is unlikely to be lowered even in the operating environment of a fuel cell. Therefore, the adhesive seal member of the present invention ensures good sealing performance even when a fuel cell is operated for a long period of time. In other words, the adhesive seal member can improve the operation reliability of a fuel cell.

In the adhesive seal member of the present invention, the "sealing a component member in a fuel cell" means sealing the periphery of a component member and the space between component members. The adhesive seal member of the present invention has rubber elasticity in a wide temperature range from the operating temperature of a fuel cell to about -30°C. On this account, the adhesive seal member of the present invention enables not only the sealing due to adhesion but also the sealing due to stress. For example, when the adhesive seal member of the present invention is disposed between members opposed to each other, the adhesive seal member of the present invention may be bonded to one member alone and the space between the adhesive seal member and the other member may be sealed by stress. Needless to say, the adhesive seal member of the present invention may be bonded to each member, thereby sealing the space between the members by adhesion. When the rubber elasticity is lost at an extremely low temperature, the sealing performance is likely to be lowered in the stress sealing as compared with the adhesion sealing. However, the adhesive seal member of the present invention maintains the rubber elasticity even at an extremely low temperature and thus the sealing performance is unlikely to be lowered even in the stress sealing.

The adhesive seal member of the present invention uses an organic peroxide having a one-hour half-life temperature of 130°C or less as the cross-linking agent (the component (B)). Here, the "half-life" is time until the initial concentration of an organic peroxide is halved. Hence, the "half-life temperature" is an index showing a decomposition temperature of an organic peroxide. The "one-hour half-life temperature" is a temperature at which the half-life is one hour. In other words, a compound having a lower one-hour half-life temperature is readily decomposed at a low temperature. By using an organic peroxide having a one-hour half-life temperature of 130°C or less, the cross-linking can be performed at a lower temperature (specifically 150°C or less) and for a shorter period of time. Therefore, the adhesive seal member of the present invention can be used, for example, even close to the electrolyte membrane in a polymer electrolyte fuel cell.

BRIEF DESCRIPTION OF THE DRAWINGS

[FIG. 1] FIG. 1 is a perspective view of a polymer electrolyte fuel cell using an adhesive seal member of the present invention.
[FIG. 2] FIG. 2 is a perspective view of stacked cells.
[FIG. 3] FIG 3 is an exploded perspective view of a single cell.
[FIG. 4] FIG. 4 is a sectional view taken along the line IV-IV in FIG. 2.

Description of Reference Numerals

1: polymer electrolyte fuel cell, 2: MEA, 20: electrolyte membrane, 21a, 21b: electrode, 3: separator, 30: gas flow path, 31: refrigerant flow path, 4a, 4b: adhesive seal member, 40b: lip part, C: cell.

MODES FOR CARRYING OUT THE INVENTION

Embodiments of an adhesive seal member for a fuel cell of the present invention will now be described. The adhesive seal member for a fuel cell of the present invention is not limited to the following embodiments and may be achieved in various embodiments in which changes and modifications have been made by those skilled in the art without departing from the scope of the present invention.

<Adhesive Seal Member for Fuel Cell>

The adhesive seal member of the present invention includes a cross-linked product of a rubber composition containing the components (A) to (D). First, a rubber component as the component (A) will be described.
The rubber component used in the adhesive seal member of the present invention is at least one selected from ethylene-propylene rubber (EPM) and ethylene-propylene-diene rubber (EPDM) having an ethylene content of 40% by mass or more and less than 50% by mass. One of the EPM and the EPDM may be used and a mixture of them may be used as long as the ethylene content is 40% by mass or more and less than 50% by mass. Two or more pieces of rubber that are the same kind but have, for example, different ethylene contents may be used as a mixture. In the adhesive seal member of the present invention, the rubber component desirably contains an EPDM in consideration of acid resistance and water resistance in the operating environment of a fuel cell. In order that the reduction of the rubber elasticity at an extremely low temperature is suppressed and that the sealing performance is further improved, an EPM or EPDM having an ethylene content of less than 50% by mass is necessary. Meanwhile, an EPM and EPDM having an excessively low ethylene content may have lowered rubber physical properties.
Therefore, according to the invention an EPM or EPDM having an ethylene content of 40% by mass or more is used as the rubber component so that elongation and tensile strength required for an adhesive seal member are ensured.
Next, an organic peroxide as the component (B) will be described. Examples of the organic peroxide having a one-hour half-life temperature of 130°C or less include a peroxyketal, a peroxyester, a diacyl peroxide, and a peroxydicarbonate. Among them, at least one of peroxyketals and peroxyesters having a one-hour half-life temperature of 100°C or more is desirably adopted because such a compound is readily cross-linked at a temperature of about 130°C and a rubber composition obtained by kneading the compound together with a cross-linking agent has excellent handleability. In particular, peroxyketals and peroxyesters having a one-hour half-life temperature of 110°C or more are more preferred. When a peroxyester is used, cross-linking can be performed for a shorter period of time.
Examples of the peroxyketal include n-butyl 4,4-di(t-butylperoxy)valerate, 2,2-di(t-butylperoxy)butane, 2,2-di(4,4-di(t-butylperoxy)cyclohexyl)propane, 1,1-di(t-butylperoxy)cyclohexane, 1,1-di(t-hexylperoxy)cyclohexane, 1,1-di(t-hexylperoxy)-3,3,5-trimethylcyclohexane, and 1,1-di(t-butylperoxy)-2-methylcyclohexane.
Examples of the peroxyester include t-butyl peroxybenzoate, t-butyl peroxyacetate, t-hexyl peroxybenzoate, 2,5-dimethyl-2,5-di(benzoylperoxy)hexane, t-butyl peroxy-2-ethylhexylmonocarbonate, t-butyl peroxylaurate, t-butyl peroxyisopropylmonocarbonate, t-butyl peroxy-3,5,5-trimethylhexanoate, t-butyl peroxymaleic acid, and t-hexyl peroxyisopropylmonocarbonate.
Among them, 1,1-di(t-butylperoxy)cyclohexane, t-butyl peroxyacetate, and t-butyl peroxyisopropylmonocarbonate are preferred because such a compound has a comparatively high reaction rate with a rubber component. In particular, when t-butyl peroxyisopropylmonocarbonate is used, cross-linking can be carried out for a shorter period of time.
Next, a crosslinking aid as the component (C) will be described. The crosslinking aid may be appropriately selected depending on a type of the organic peroxide (B). Examples of the crosslinking aid include a maleimide compound,

triallyl cyanurate (TAC), triallyl isocyanurate (TAIC), and trimethylolpropane trimethacrylate (TMPT). Among them, a maleimide compound is desirably used because such a compound can greatly improve the cross-linking density and the tensile strength.

When a rubber component is cross-linked, molecules are restricted at cross-linked points. On this account, a rubber component having a larger number of cross-linked points is unlikely to be crystallized. In other words, the increase of the cross-linking density can suppress the crystallization of a rubber component at an extremely low temperature. In order that the cross-linking density is increased, for example, the amount of the organic peroxide (B) or the crosslinking aid (C) may be increased. From such viewpoints, the amount of the organic peroxide is desirably 1 part by mass or more based on 100 parts by mass of the rubber component. Meanwhile, an excessively large amount of the organic peroxide rapidly increases the cross-linking density during a cross-linking reaction, which lowers the adhesive strength. Hence, the amount of the organic peroxide is desirably 10 parts by mass or less based on 100 parts by mass of the rubber component. The amount of the crosslinking aid is desirably 0.1 parts by mass or more based on 100 parts by mass of the rubber component. Meanwhile, an excessively large amount of the crosslinking aid leads to an excessively large cross-linking density, which lowers the adhesive strength. On this account, the amount of the crosslinking aid is desirably 3 parts by mass or less.

Next, an adhesive component as the component (D) will be described. The adhesive component (D) is at least one selected from a resorcinol compound and a melamine compound, an aluminate coupling agent, and a silane coupling agent. In other words, a resorcinol compound and a melamine compound alone, an aluminate coupling agent alone, or a silane coupling agent alone may be used. A combination of a resorcinol compound, a melamine compound, and an aluminate coupling agent, a combination of a resorcinol compound, a melamine compound, and a silane coupling agent, or a combination of an aluminate coupling agent and a silane coupling agent may be used. All a resorcinol compound, a melamine compound, an aluminate coupling agent, and a silane coupling agent may be used.

Examples of the resorcinol compound include resorcin, a modified resorcin-formaldehyde resin, and a resorcin-formaldehyde (RF) resin. These compounds may be used alone or in combination of two or more of them. Among them, a modified resorcin-formaldehyde resin is preferred due to low volatility, low hygroscopic properties, and excellent compatibility with rubber. Examples of the modified resorcin-formaldehyde resin include resins of General Formulae (1) to (3). In particular, the resin of General Formula (1) is preferred.

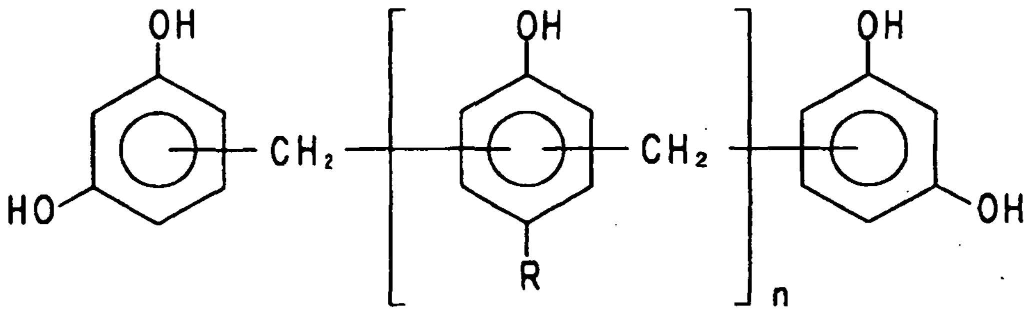

... (1)

[Where R is a hydrocarbon group and n is an integer]

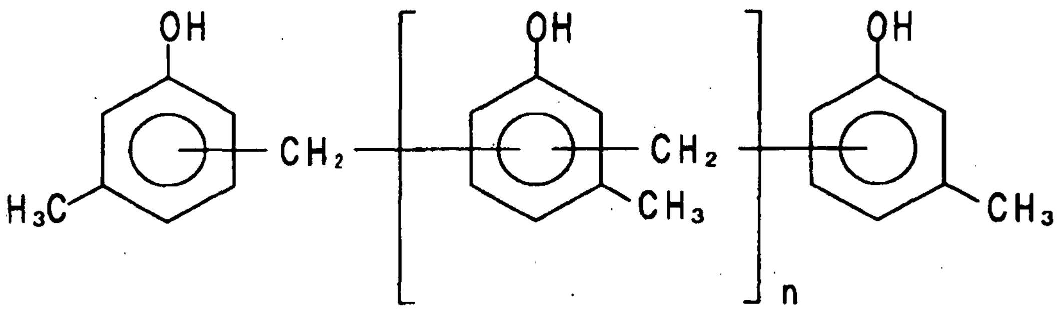

... (2)

[Where n is an integer]

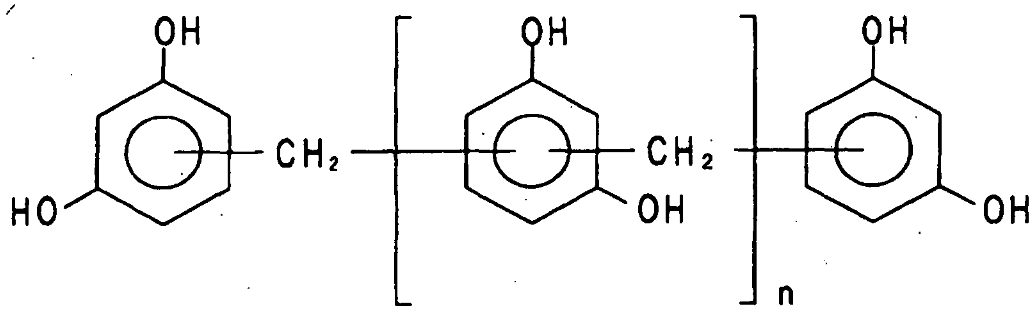

· · · (3)

[Where n is an integer]

In order to obtain an intended adhesive strength, the amount of the resorcinol compound is desirably 0.1 parts by mass or more based on 100 parts by mass of the rubber component. The amount is more preferably 0.5 parts by mass or more. The amount of the resorcinol compound is desirably 10 parts by mass or less because an excess amount of the resorcinol compound leads to the deterioration of rubber physical properties. The amount is more preferably 5 parts by mass or less.

Examples of the melamine compound include a methylated formaldehyde-melamine polymer and hexamethylenetetramine. These compounds may be used alone or in combination of two or more of them. Such a compound is decomposed by heat during cross-linking and supplies formaldehyde in the system. Among them, a methylated formaldehyde-melamine polymer is preferred due to low volatility, low hygroscopic properties, and excellent compatibility with rubber. Preferred examples of the methylated formaldehyde-melamine polymer include the compound of General Formula (4). In particular, in General Formula (4), a mixture containing a compound in which n = 1 in an amount of 43% to 44% by mass, a compound in which n = 2 in an amount of 27% to 30% by mass, and a compound in which n = 3 in an amount of 26% to 30% by mass is preferred.

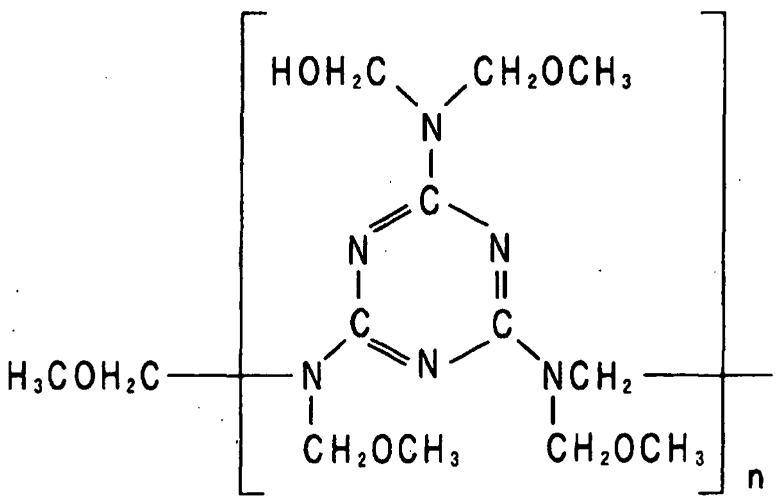

· · · (4)

[Where n is an integer]

The compounding ratio by mass of the resorcinol compound and the melamine compound is desirably in a range of 1 : 0.5 to 1 : 2. The compounding ratio is more preferably in a range of 1 : 0.77 to 1 : 1.5. When the compounding ratio of the melamine compound to the resorcinol compound is less than 0.5, a rubber is likely to have a slightly lowered tensile strength, elongation, and the like. In contrast, when the compounding ratio of the melamine compound is more than 2, the adhesive strength is saturated. On this account, the compounding ratio more than 2 increases the cost.

The aluminate coupling agent may be appropriately selected from aluminum organic compounds having a hydrolyzable alkoxy group and a moiety with affinity for a rubber component, in consideration of adhesive properties and the like. Examples of the aluminate coupling agent include aluminum alkylacetoacetate diisopropylate, aluminum ethylacetoacetate diisopropylate, aluminum tris-ethylacetoacetate, aluminum isopropylate, aluminum diisopropylate mono-secondary butyrate, aluminum secondary butyrate, aluminum ethylate, aluminum bis-ethylacetoacetate mono-acetylacetonate, aluminum tris-acetylacetonate, and aluminum mono-isopropoxy mono-oxyethyl acetoacetate. These compounds may be used alone or in combination of two or more of them. Among them, aluminum alkylacetoacetate diisopropylate, aluminum ethylacetoacetate diisopropylate, and aluminum tris-ethylacetoacetate are preferred.

In order to obtain an intended adhesive strength, the amount of the aluminate coupling agent is desirably 0.5 parts by mass or more based on 100 parts by mass of the rubber component. The amount is more preferably 2 parts by mass or more. An excess amount of the aluminate coupling agent may lead to the deterioration of rubber physical properties and may lead to the reduction of workability. On this account, the amount of the aluminate coupling agent is desirably 10 parts by mass or less. The amount is more preferably 6 parts by mass or less.

The silane coupling agent may be appropriately selected from compounds having a functional group such as an epoxy group, an amino group, and a vinyl group, in consideration of adhesive properties and the like. Examples of the silane coupling agent include vinyltrimethoxysilane, vinyltriethoxysilane, vinyl-tris(2-methoxyethoxy)silane, 3-methacryloxypropyltrimethoxysilane, 3-methacryloxypropyltriethoxysilane, 3-glycidoxypropyltrimethoxysilane, 3-glycidoxypropyltriethoxysilane, 3-glycidoxypropylmethyldiethoxysilane, 2-(3,4-epoxycyclohexyl)ethyltrimethoxysilane, N-2-(aminoethyl)-3-aminopropyltrimethoxysilane, 3-aminopropyltrimethoxysilane, and N-phenyl-3-aminopropyltrimethoxysilane. These compounds may be used alone or in combination of two or more of them. Among them, when at least one selected from compounds having an epoxy group is used, the adhesive strength is improved and the adhesive strength is unlikely to be lowered even in the operating environment of a fuel cell. Specifically preferred examples include 3-glycidoxypropyltrimethoxysilane, 3-glycidoxypropyltriethoxysilane, 3-glycidoxypropylmethyldiethoxysilane, and 2-(3,4-epoxycyclohexyl)ethyltrimethoxysilane.

In order to obtain an intended adhesive strength, the amount of the silane coupling agent is desirably 0.5 parts by mass or more based on 100 parts by mass of the rubber component. The amount is more preferably 2 parts by mass or more. An excess amount of the silane coupling agent may lead to the reduction of rubber physical properties and may lead to the reduction of workability. On this account, the amount of silane coupling agent is desirably 10 parts by mass or less. The amount is more preferably 6 parts by mass or less.

Next, a softener as the component (E) will be described. A softener having a pour point of -40°C or less is optional in the adhesive seal member of the present invention. The adhesive seal member (rubber composition) of the present invention desirably contains a softener having a pour point of -40°C or less.

Examples of the softener having a pour point of -40°C or less include poly-$\alpha$-olefin, dioctyl phthalate (DOP), dioctyl adipate (DOA), dioctyl sebacate (DOS), and dibutyl sebacate (DBS). These compounds may be used alone or in combination of two or more of them. Among them, poly-$\alpha$-olefin is preferred because it has good compatibility with a rubber component and is unlikely to bleed. The poly-$\alpha$-olefin is obtained by polymerization of a $C_{6-16}$ $\alpha$-olefin. A poly-$\alpha$-olefin having a smaller molecular weight has a smaller viscosity and a lower pour point.

A softener having a lower pour point is unlikely to be hardened at an extremely low temperature. Hence, a softener having a lower pour point has larger effect of suppressing the crystallization of a rubber component at an extremely low temperature. The softener preferably has a pour point of -50°C or less. A softener having an excessively low pour point is likely to volatilize, for example, during the operation of a fuel cell. Thus, the softener desirably has a pour point of -80°C or more. The pour point can be determined in accordance with JIS K2269 (1987).

The amount of the softener is desirably 5 parts by mass or more based on 100 parts by mass of the rubber component. Such an amount enables the adhesive seal member of the present invention to have improved sealing performance at an extremely low temperature. The amount is more preferably 10 parts by mass or more and even more preferably 20 parts by mass or more. A softener contained in an excessively large amount causes bleeding and thus the effect of the softener is unlikely to be provided. Hence, the amount of the softener is desirably 50 parts by mass or less based on 100 parts by mass of the rubber component. The amount is more preferably 40 parts by mass or less and even more preferably 30 parts by mass or less.

The rubber composition included in the adhesive seal member of the present invention may contain, in addition to the components (A) to (D). various additives that are commonly used as additives for rubber. For example, carbon black is preferably contained as a reinforcing agent. A carbon black with any grade may be used and an appropriate carbon black may be selected from those with SAF, ISAF, HAF, MAF, FEF, GPF, SRF, FT, and MT grades. A large amount of carbon black increases the hardness of an adhesive seal member. This may lower the tensile strength and the elongation. Hence, the amount of carbon black is desirably 10 parts by mass or more and 70 parts by mass or less based on 100 parts by mass of the rubber component.

Examples of other additives include an anti-oxidant, a tackifier, and a process aid. Examples of the anti-oxidant include a phenol anti-oxidant, an imidazole anti-oxidant, and a wax. The anti-oxidant may be added in an amount of about 0.5 parts by mass to 10 parts by mass based on 100 parts by mass of the rubber component. A softener having a pour point of higher than -40°C may be added together with the softener as the component (E). Examples of the softener capable of being used in combination include petroleum softeners such as process oil, lubricant, paraffin, liquid paraffin, and vaseline; fatty oil softeners such as castor oil, linseed oil, rapeseed oil, and coconut oil; waxes such as tall oil, vulcanized oil, beeswax, carnauba wax, and lanolin; and linoleic acid, palmitic acid, stearic acid, and lauric acid.

<Method for Producing Adhesive Seal Member for Fuel Cell>

The adhesive seal member of the present invention is produced by cross-linking of a rubber composition containing the components (A) to (D) and, as necessary, the softener (E) and various additives. The rubber composition may be prepared, for example, as follows. First, materials except the organic peroxide (B), the crosslinking aid (C), and the adhesive component (D) are premixed and kneaded at 80°C to 140°C for several minutes. Next, the obtained kneaded material is cooled and the organic peroxide (B), the crosslinking aid (C), and the adhesive component (D) are added. Then, the mixture is kneaded at a roll temperature of 40°C to 70°C for 5 minutes to 30 minutes using a roller such as an open roll. The adhesive component (D) may be mixed in the premixing step.

The prepared rubber composition is cross-linked at a predetermined temperature. By the cross-linking, the rubber composition becomes the adhesive seal member of the present invention. At the time, when the rubber composition is cross-linked while being in contact with a member, the member and the adhesive seal member can be bonded to each other. Here, the cross-linking temperature is desirably 150°C or less. Cross-linking performed at a low temperature and for a short period of time enables the adhesive seal member of the present invention to be used, for example, even close to the electrolyte membrane of a polymer electrolyte fuel cell.

The prepared rubber composition is desirably molded into a predetermined shape. For example, if the rubber composition is molded into a film shape, the adhesive seal member is attached to a member and is easily cross-linked and bonded to the member. This eliminates complicated alignment between component members of a fuel cell, which makes it possible to easily perform continuous processing. When the adhesive seal member is previously laminated onto a member, the adhesion process is more easily performed. As described above, the adhesive seal member of the present invention having a film shape can more improve, for example, the productivity of a fuel cell. In addition, by heating component members of a fuel cell, for example, MEA and separators, and the adhesive seal member of the present invention in a mold, the adhesive seal member can be integrally molded with the component members.

As described above, in order that the crystallization of a rubber component at an extremely low temperature is suppressed, the cross-linking density is preferably large. For determining the cross-linking density, a 100% modulus value can be used as the index. For example, the adhesive seal member of the present invention desirably has a 100% modulus of 2 MPa or more and 4 MPa or less. In this case, the rubber elasticity is unlikely to be lowered even at an extremely low temperature because the cross-linking density is large. The 100% modulus is a value obtained by dividing a tensile force when a dumbbell specimen is elongated 100% by an initial cross sectional area of the dumbbell specimen. The 100% modulus may be determined in accordance with JIS K6251 (2010).

The adhesive seal member of the present invention is excellent in the sealing performance even at an extremely low temperature. This is apparent from that the adhesive seal member of the present invention has a Gehman torsion test temperature T2 of -40°C or less, as shown in examples below. The Gehman torsion test may be carried out in accordance with JIS K6261 (2006). T2 is a temperature at which a specific modulus reaches twice a modulus at room temperature (23°C $\pm$ 2°C). When T2 is -40°C or less, the rubber elasticity is maintained even at an extremely low temperature, and thus intended sealing performance is ensured.

<Application to Fuel Cell>

The adhesive seal member of the present invention seals a component member in a fuel cell. The adhesive seal member is applicable to a fuel cell that is operated at a temperature at which the rubber component of the adhesive seal member of the present invention can be used. For example, a polymer electrolyte fuel cell (PEFC) (including a direct methanol fuel cell (DMFC)) is preferred.

Parts to be sealed are various depending on, for example, the type and the structure of a fuel cell. In other words, the adhesive seal member of the present invention can be used for any parts which are required to keep air-tightness and liquid-tightness and to which a seal member is conventionally disposed. The adhesive seal member of the present invention may be used for all the parts needing sealing in a fuel cell or may be used some parts needing sealing. Examples of the sealing part include a space between separators facing each other while an MEA is interposed therebetween, peripheries of an MEA and a porous layer, and a space between separators constituting respective cells adjacent to each other.

An embodiment of a polymer electrolyte fuel cell using the adhesive seal member of the present invention will be described below. FIG. 1 shows a perspective view of a polymer electrolyte fuel cell using the adhesive seal member of the present invention. As shown in FIG 1, a polymer electrolyte fuel cell 1 includes a large number of stacked cells C. FIG 2 shows a perspective view of the stacked cells C (three cells are shown). FIG 3 shows an exploded perspective view of a single cell C. FIG 4 shows a sectional view taken along the line IV-IV in FIG 2. As shown in FIG 2 to FIG. 4, the cell C includes an MEA 2, separators 3, and an adhesive seal member 4a.

The MEA 2 includes an electrolyte membrane 20 and a pair of electrodes 21a and 21b. The electrolyte membrane 20 has a rectangular thin plate shape. The pair of electrodes 21 a and 21 b has a rectangular thin plate shape. The pair

of electrodes 21a and 21 b are disposed on both sides in the stacking direction (vertical direction) interposing the electrolyte membrane 20 therebetween.

The separator 3 is made of metal and has a rectangular thin plate shape. The separator 3 has six grooves in total extending in a longitudinal direction. The separator 3 has an uneven cross section due to the grooves (see FIG. 4). The separators 3 are disposed on the both sides of the MEA 2 in the stacking direction while facing each other. Between the MEA 2 and each of the separators 3, gas flow paths 30 are formed by using the uneven shape for supplying gases to the electrodes 21 a and 21 b. Between the separators 3 of the cells C adjacent to each other in the stacking direction with the back faces of the separators being opposed to each other, a refrigerant flow path 31 is formed by using the uneven shape for supplying a refrigerant.

The adhesive seal member 4a has a rectangular frame shape and has a large wall thickness in the stacking direction. The adhesive seal member 4a is bonded to the periphery of the MEA 2 and the separators 3 stacked. The adhesive seal member 4a seals the periphery of the MEA 2 between the separators 3 facing each other.

Between the separators 3 of the cells C adjacent to each other in the stacking direction with the back faces of the separators being opposed to each other, an adhesive seal member 4b is interposed. The adhesive seal member 4b has a rectangular frame shape and has a small wall thickness in the stacking direction. The bottom face of the adhesive seal member 4b is bonded to the top face of the separator 3 disposed beneath the adhesive seal member 4b. On a peripheral part on the top face of the adhesive seal member 4b, a lip part 40b having a frame shape is formed (in FIG 3, shown by a hatching pattern in the adhesive seal member 4b that is shown in the upper part of the cell C). The lip part 40b is in contact with the bottom face of the separator 3 disposed on the adhesive seal member 4b. The lip part 40b is compressed and deformed by clamping force in the stacking direction when the cells C are stacked to assemble the polymer electrolyte fuel cell 1. This forms a seal line, thereby suppressing the leakage of a refrigerant. The adhesive seal members 4a and 4b are included in the adhesive seal member of the present invention.

During operation of the polymer electrolyte fuel cell 1, a fuel gas and an oxidant gas are supplied through the respective gas flow paths 30. In order to reduce the heat generated during power generation, a refrigerant flows through the flow path 31. Here, the periphery of the MEA 2 is sealed with the adhesive seal member 4a. On this account, the mixture and leakage of the gases are not caused. In addition, the electrolyte membrane 20 is maintained in a wet condition. The adhesive seal member 4a can be bonded at a low temperature of about 150°C and for a short period of time. Hence, the electrolyte membrane 20 is unlikely to be deteriorated during the adhesion process. The space between the separators 3 of the cells C adjacent to each other in the stacking direction with the back faces of the separators being opposed to each other, is also sealed with the adhesive seal member 4b. On this account, the refrigerant is unlikely to be leaked from the refrigerant flow path 31 to the outside. The sealing performance of the adhesive seal members 4a and 4b is unlikely to be lowered even at an extremely low temperature of about -20°C to -30°C. Moreover, the adhesive properties of the adhesive seal members 4a and 4b is unlikely to be lowered even in an operating environment of the polymer electrolyte fuel cell 1. Therefore, the polymer electrolyte fuel cell 1 is excellent in durability. In other words, the polymer electrolyte fuel cell 1 can be stably operated over a long period of time.

Examples

The present invention will next be described in detail with reference to examples.

<Preparation of Rubber Composition>

Raw materials shown in Table 1 were mixed to prepare each rubber composition of Reference Examples 1 to 7, 9 and 12 and Examples 8, 10, 11 and 13 and Comparative Example. In Table 1, each raw material used was as follows.

(A) Rubber component

EPDM (1): "JSR EP27" (ethylene content = 54% by mass) manufactured by JSR Corporation
EPDM (2): "Esprene (registered trademark) 505A" (ethylene content = 50% by mass) manufactured by Sumitomo Chemical Co., Ltd.
EPDM (3): "Mitsui EPT 4045M" (ethylene content = 45% by mass) manufactured by Mitsui Chemicals, Inc.
EPDM (4): "Keltan (registered trademark) 4903" (ethylene content = 48% by mass) manufactured by DSM
EPDM (5): "Mitsui EPT 9090M" (ethylene content = 41% by mass) manufactured by Mitsui Chemicals, Inc.

(B) Organic peroxide

Peroxyketal: "Perhexa (registered trademark) C-40" (1,1-di(t-butylperoxy)cyclohexane, a purity of 40%, one-hour half-life temperature = 111.1 °C) manufactured by NOF Corporation

(C) Crosslinking aid

Maleimide compound: "Vulnoc (registered trademark) PM" manufactured by Ouchi Shinko Chemical Industrial Co., Ltd.

(D) Adhesive component

Resorcinol compound: "Tackirol (registered trademark) 620" manufactured by Taoka Chemical Co., Ltd.
Melamine compound: "Sumikanol (registered trademark) 507AP" manufactured by Sumitomo Chemical Co., Ltd.
Silane coupling agent: "KBM403" (3-glycidoxypropyltrimethoxysilane) manufactured by Shin-Etsu Chemical Co., Ltd.

(E) Softener

Paraffinic process oil: "Diana (registered trademark) Process Oil PW380" (pour point = -15°C) manufactured by Idemitsu Kosan Co., Ltd.
Poly-α-olefin (1): "SpectraSyn (registered trademark) 4" (pour point = -60°C) manufactured by Exxon Mobil Corporation
Poly-α-olefin (2): "SpectraSyn 10" (pour point = -48°C) manufactured by Exxon Mobil Corporation
Poly-α-olefin (3): "SpectraSyn 2C" (pour point = -57°C) manufactured by Exxon Mobil Corporation
Poly-α-olefin (4): "Synfluid (registered trademark) 401" (pour point = -73°C) manufactured by Nippon Steel Chemical Co., Ltd.

(F) Reinforcing agent

Carbon black (GPF grade): "Shoblack (registered trademark) IP200" manufactured by Cabot Japan

[Table 1]

[Table 1]

| | Raw material | | Reference Example 1 | Reference Example 2 | Reference Example 3 | Reference Example 4 | Reference Example 5 | Reference Example 6 | Reference Example 7 | Example 8 | Reference Example 9 | Example 10 | Example 11 | Reference Example 12 | Example 13 | Comparative Example 1 |
|---|---|---|---|---|---|---|---|---|---|---|---|---|---|---|---|---|
| Formulation (parts by mass) | (A) Rubber component | EPDM (1) | - | - | - | - | - | - | - | - | - | - | - | 100 | - | 100 |
| | | EPDM (2) | 100 | 100 | 100 | 100 | 100 | 100 | 100 | - | 100 | - | - | - | - | - |
| | | EPDM (3) | - | - | - | - | - | - | - | 100 | - | - | - | - | - | - |
| | | EPDM (4) | - | - | - | - | - | - | - | - | - | 100 | - | - | 100 | - |
| | | EPDM (5) | - | - | - | - | - | - | - | - | - | - | 100 | - | - | - |
| | (B) Organic peroxide | Peroxyketal | 5 | 5 | 5 | 5 | 5 | 5 | 5 | 5 | 5 | 5 | 5 | 5 | 5 | 5 |
| | (C) Crosslinking aid | Maleimide compound | 1.5 | 1.5 | 1.5 | 1.5 | 1.5 | 1.5 | 1.5 | 1.8 | 1.5 | 1.5 | 1.5 | 1.5 | 1.5 | 0.5 |
| | (D) Adhesive compouent | Resorcinol compound | 2 | 2 | 2 | 2 | 2 | 2 | 2 | 2 | 2 | 2 | 2 | 2 | 2 | 2 |
| | | Melamine compound | 1.5 | 1.5 | 1.5 | 1.5 | 1.5 | 1.5 | 1.5 | 1.5 | 1.5 | 1.5 | 1.5 | 1.5 | 1.5 | 1.5 |
| | | Silane coupling agent | 3 | 3 | 3 | 3 | 3 | 3 | 3 | 3 | 3 | 3 | 3 | 3 | 3 | 3 |

(continued)

| | Raw material | | Reference Example 1 | Reference Example 2 | Reference Example 3 | Reference Example 4 | Reference Example 5 | Reference Example 6 | Reference Example 7 | Example 8 | Reference Example 9 | Example 10 | Example 11 | Reference Example 12 | Example 13 | Comparative Example 1 |
|---|---|---|---|---|---|---|---|---|---|---|---|---|---|---|---|---|
| | (E) Softener | Paraflinic process oil | - | 10 | - | - | - | - | - | - | - | - | - | - | 20 | 20 |
| | | Poly-α-olefin (1) | 20 | 10 | 30 | 15 | - | - | - | 20 | - | - | - | - | - | - |
| | | l'oly-α-olefin (2) | - | - | - | - | 20 | - | - | - | 10 | 20 | - | 20 | - | - |
| | | Poly-α-olefin (3) | - | - | - | - | - | 20 | - | - | - | - | 20 | - | - | - |
| | | Poly-α-olefin (4) | - | - | - | - | - | - | 20 | - | - | - | - | - | - | - |
| | (F) Reinforcing agent | Carbon black | 45 | 45 | 45 | 45 | 45 | 45 | 45 | 45 | 45 | 45 | 45 | 45 | 45 | 45 |
| Evaluation | 100% modulus [MPa] | | 2.6 | 2.8 | 2.1 | 2.9 | 2.8 | 2.5 | 2.5 | 2.3 | 3.8 | 3.2 | 3.1 | 2.7 | 3.2 | 1.8 |
| | 90° peel strength (index *) | | 100 | 100 | 100 | 100 | 100 | 100 | 100 | 100 | 100 | 100 | 100 | 100 | 100 | 100 |
| | Gelunan torsion test temperature T2 [°C] | | -45 | -41 | -46 | -45 | -42 | -46 | -45 | -45 | -42 | -48 | -45 | -40 | -45 | -31 |
| | -30°C compression set (index *) | | 60 | 78 | 58 | 59 | 65 | 56 | 58 | 60 | 61 | 53 | 55 | 80 | 58 | 100 |
| | 100°C compression ser (index *) | | 35 | 60 | 35 | 35 | 35 | 32 | 35 | 40 | 35 | 34 | 34 | 50 | 40 | 100 |

* Comparative Examples 1 is regarded as 100.

First, in Table 1, a rubber component (A), a softener (E), and a reinforcing agent (F) were kneaded using a Banbury mixer at 120°C for 5 minutes. After cooling the kneaded product, an organic peroxide (B), a crosslinking aid (C), and an adhesive component (D) were added, and the whole was kneaded using an open roll at 50°C for 10 minutes to afford a rubber composition. The obtained rubber composition was molded using a press into a flat shape having a predetermined thickness.

<Production of Seal Member and Evaluation of Tensile Characteristics>

Each rubber composition of Reference Examples 1 to 7, 9 and 12 and Examples 8, 10, 11 and 13 and Comparative Example 1 was maintained at 150°C for 10 minutes to be cross-linked so that a seal member is produced.

The 100% modulus of each seal member of Reference Examples, Examples and Comparative Example was determined. The 100% modulus was determined in accordance with JIS K6251 (2010). A dumbbell specimen No. 5 was used. The test results are summarized in Table 1.

As shown in Table 1, each seal member of Examples 8, 10, 11 and 13 showed a 100% modulus of 2 MPa or more, which was larger than the 100% modulus of the seal member of Comparative Example 1. Each seal member of Examples 8, 10, 11 and 13 included the crosslinking aid in a larger amount than that of the seal member of Comparative Example. On this account, each seal member of Examples 8, 10, 11 and 13 obtained a large cross-linking density and a large 100% modulus.

<Evaluation of Adhesive Properties>

In accordance with JIS K6256-2 (2006), 90° peel test was performed, and the adhesive properties of each seal member of Reference Examples, Examples and Comparative Example are evaluated. First, a plate-shaped rubber composition having a width of 25 mm, a length of 60 mm, and a thickness of 5 mm was disposed on a surface of a stainless steel plate having a width of 25 mm, a length of 60 mm, and a thickness of 2 mm. Subsequently, the rubber composition and the stainless steel plate were maintained at 150°C for 10 minutes while they are compressed from the rubber composition side and the rubber composition was cross-linked and bonded to the stainless steel plate, thereby preparing a test piece. Next, the prepared test piece was attached to a predetermined test jig and the 90° peel test was carried out. Table 1 summarizes the peel strength of each test piece in the 90° peel test. Table 1 shows the index of peel strength of each seal member where the peel strength of the seal member of Comparative Example 1 is regarded as a standard (100). The index of peel strength was calculated in accordance with Equation (I).

$$\text{Peel strength index} = (\text{peel strength of each seal member})/(\text{peel strength of seal member of Comparative Example 1}) \times 100 \quad \text{(I)}$$

As shown in Table 1, each seal member of Examples 8, 10, 11 and 13 had the same peel strength as the peel strength of the seal member of Comparative Example 1. As described above, each seal member of Examples 8, 10, 11 and 13 had good adhesive properties.

<Evaluation of Low Temperature Characteristics>

[Gehman Torsion Test]

Gehman torsion test was carried out on each seal member of Reference Eaxmples, Examples and Comparative Example in accordance with JIS K6261 (2006), and a temperature T2 at which a specific modulus reached twice a modulus at room temperature (23 °C) was determined. The test results are summarized in Table 1.

As shown in Table 1, the seal member of Comparative Example 1 had a T2 of -31 °C, while each seal member of Examples 8, 10, 11 and 13 had a T2 of -40°C or less. From the result, it is revealed that each seal member of Examples 8, 10, 11 arid 13 is unlikely to be hardened even at an extremely low temperature of -20°C to -30°C and can maintain rubber elasticity.

A comparison between Example 13 and Comparative Example 1 each of which contains a paraffinic process oil having a pour point of -15°C alone as the softener showed that the seal member of Example 13 using an EPDM (4) having an ethylene content of 48% by mass had a lower T2 than that of the seal member of Comparative Example 1 using an EPDM (1) having an ethylene content of 54% by mass. From the result, it is ascertained that, when an EPDM having an ethylene content of 40% by mass or more and less than 50% by mass is used, the crystallization at an

extremely low temperature is suppressed, and thus the reduction of rubber elasticity can be suppressed.

[Compression Set Test]

Compression set test was carried out on each seal member of Reference Examples, Examples and Comparative Example in accordance with JIS K6262 (2006). Two types of the compression set tests were carried out at -30°C as a low temperature test and at 100°C as a high temperature test. In the low temperature test, a seal member was compressed at -30°C for 24 hours, then released, and maintained at the same temperature for 30 minutes. Then, the thickness was measured and the compression set was calculated. In the high temperature test, a seal member was compressed at 100°C for 24 hours, then released, and maintained at room temperature for 30 minutes. Then, the thickness was measured and the compression set was calculated. In each test, the compression ratio was 25%. The test results are summarized in Table 1. In Table 1, each compression set at -30°C and at 100°C is represented by an index where that of the seal member of Comparative Example 1 is regarded as a standard (100). The index of compression set was calculated in accordance with Equation (II).

$$\text{Compression set index} = (\text{compression set of each seal member})/(\text{compression set of seal member of Comparative Example 1}) \times 100 \quad \text{(II)}$$

As shown in Table 1, in each test at a low temperature and at a high temperature, each seal member of Examples 8, 10, 11 and 13 had a smaller compression set than the compression set of the seal member of Comparative Example 1. A comparison between Example 13 and Comparative Example 1 each of which contains a paraffinic process oil having a pour point of -15°C alone as the softener showed that the seal member of Example 13 using an EPDM (4) having an ethylene content of 48% by mass had a smaller compression set than that of the seal member of Comparative Example 1 using an EPDM (1) having an ethylene content of 54% by mass. From the result, it is ascertained that, when an EPDM having an ethylene
content of 40% by mass or more and less than 50% by mass is used, the crystallization at an extremely low temperature can be suppressed, and thus the reduction of rubber elasticity can be suppressed.

As described above, each seal member of Examples 8, 10, 11 and 13 is unlikely to be flattened both at a high temperature of 100°C and at an extremely low temperature of -30°C. Therefore, with the adhesive seal member of the present invention, the sealing performance at an extremely low temperature can be improved without sacrificing the sealing performance at a high temperature.

INDUSTRIAL APPLICABILITY

The adhesive seal member of the present invention can be bonded to a member at a low temperature and for a short period of time without using an additional adhesive. In addition, the adhesive seal member of the present invention does not lose rubber elasticity even at an extremely low temperature of about -20°C to -30°C. Therefore, the adhesive seal member provides good sealing performance even in cold climate areas. As described above, the adhesive seal member of the present invention enables both adhesion sealing and stress sealing in a wide temperature range in which a fuel cell is used.

## Claims

1. An adhesive seal member for a fuel cell, the adhesive seal member sealing a component member in the fuel cell and comprising a cross-linked product of a rubber composition containing components (A) to (D):

   (A) at least one rubber component selected from ethylene-propylene rubber and ethylene-propylene-diene rubber
   (B) an organic peroxide having a one-hour half-life temperature of 130°C or less;
   (C) a crosslinking aid; and
   (D) at least one adhesive component selected from a resorcinol compound and a melamine compound, an aluminate coupling agent, and a silane coupling agent,

   **characterized in that** the rubber component selected from ethylene-propylene rubber and ethylene-propylene diene rubber has an ethylene content of 40% by mass or more and less than 50% by mass.

**2.** The adhesive seal member for a fuel cell according to claim 1, wherein the rubber composition further contains (E) a softener having a pour point of -40°C or less.

**3.** The adhesive seal member for a fuel cell according to claim 2, wherein (E) the softener is poly-$\alpha$-olefin.

**4.** The adhesive seal member for a fuel cell according to claim 2 or 3, wherein the amount of (E) the softener is 5 parts by mass or more and 50 parts by mass or less based on 100 parts by mass of (A) the rubber component.

**5.** The adhesive seal member for a fuel cell according to any one of claims 2 to 4, wherein the rubber composition further contains a softener having a pour point of higher than -40°C.

**6.** The adhesive seal member for a fuel cell according to any one of claims 1 to 5, wherein the adhesive seal member has a 100% modulus of 2 MPa or more and 4 MPa or less.

**7.** The adhesive seal member for a fuel cell according to any one of claims 1 to 6, wherein the adhesive seal member has a Gehman torsion test temperature T2 of -40°C or less.

## Patentansprüche

**1.** Haftmitteldichtungselement für eine Brennstoffzelle, wobei das Haftmitteldichtungselement ein Bestandteilselement in der Brennstoffzelle abdichtet und ein vernetztes Produkt einer Kautschukzusammensetzung umfasst, die die Bestandteile (A) bis (D) enthält:

(A) mindestens ein Kautschukbestandteil, ausgewählt aus Ethylen-Propylen-Kautschuk und Ethylen-Propylen-Dien-Kautschuk;
(B) ein organisches Peroxid mit einer Einstunden-Halbwertszeit-Temperatur von 130°C oder weniger;
(C) ein Vernetzungshilfsmittel; und
(D) mindestens ein Haftmittelbestandteil, ausgewählt aus einer Resorcin-Verbindung und einer Melamin-Verbindung, einem Aluminat-Haftvermittler und einem Silan-Haftvermittler,

**dadurch gekennzeichnet, dass** der Kautschukbestandteil, ausgewählt aus Ethylen-Propylen-Kautschuk und Ethylen-Propylen-Dien-Kautschuk, einen Ethylen-Anteil von 40 Massen-% oder mehr und weniger als 50 Massen-% aufweist.

**2.** Haftmitteldichtungselement für eine Brennstoffzelle nach Anspruch 1, wobei die Kautschukzusammensetzung weiter (E) einen Weichmacher mit einem Fließpunkt von -40°C oder weniger enthält.

**3.** Haftmitteldichtungselement für eine Brennstoffzelle nach Anspruch 2, wobei (E) der Weichmacher ein Poly-$\alpha$-olefin ist.

**4.** Haftmitteldichtungselement für eine Brennstoffzelle nach Anspruch 2 oder 3, wobei die Menge von (E) dem Weichmacher 5 Massenteile oder mehr und 50 Massenteile oder weniger, bezogen auf 100 Massenteile des (A) Kautschukbestandteils, beträgt.

**5.** Haftmitteldichtungselement für eine Brennstoffzelle nach einem der Ansprüche 2 bis 4, wobei die Kautschukzusammensetzung weiter einen Weichmacher mit einem Fließpunkt von höher als -40°C enthält.

**6.** Haftmitteldichtungselement für eine Brennstoffzelle nach einem der Ansprüche 1 bis 5, wobei das Haftmitteldichtungselement einen 100%-Modul von 2 MPa oder mehr und 4 MPa oder weniger aufweist.

**7.** Haftmitteldichtungselement für eine Brennstoffzelle nach einem der Ansprüche 1 bis 6, wobei das Haftmitteldichtungselement eine Gehman-Torsionstest-temperatur T2 von -40°C oder weniger aufweist.

## Revendications

**1.** Elément d'étanchéité adhésif pour pile à combustible, l'élément d'étanchéité adhésif scellant un élément constitutif

dans la pile à combustible et comprenant un produit réticulé d'une composition de caoutchouc contenant les composants (A) à (D):

(A) au moins un composant de caoutchouc sélectionné parmi le caoutchouc éthylène-propylène et le caoutchouc éthylène-propylène-diène;
(B) un peroxyde organique présentant une température de demi-vie d'une heure de 130°C ou moins;
(C) un auxiliaire de réticulation, et
(D) au moins un composant adhésif sélectionné parmi un composé de résorcinol et un composé de mélamine, un agent de couplage aluminate et un agent de couplage silane,

**caractérisé en ce que** le composant de caoutchouc sélectionné parmi le caoutchouc éthylène-propylène et le caoutchouc éthylène-propylène-diène présente une teneur en éthylène de 40% en masse ou plus et moins que 50% en masse.

**2.** Elément d'étanchéité adhésif pour pile à combustible selon la revendication 1, dans lequel la composition de caoutchouc contient en outre (E) un plastifiant présentant un point d'écoulement de -40°C ou moins.

**3.** Elément d'étanchéité adhésif pour pile à combustible selon la revendication 2, dans lequel (E) le plastifiant est une poly-$\alpha$-oléfine.

**4.** Elément d'étanchéité adhésif pour pile à combustible selon la revendication 2 ou 3, dans lequel la quantité du (E) plastifiant est de 5 parties en masse ou plus et de 50 parties en masse ou moins, sur base de 100 parties en masse du (A) composant de caoutchouc.

**5.** Elément d'étanchéité adhésif pour pile à combustible selon l'une quelconque des revendications 2 à 4, dans lequel la composition de caoutchouc contient en outre un plastifiant présentant un point d'écoulement supérieur à -40°C.

**6.** Elément d'étanchéité adhésif pour pile à combustible selon l'une quelconque des revendications 1 à 5, dans lequel l'élément d'étanchéité adhésif présente un module 100% de 2 MPa ou plus et de 4 MPa ou moins.

**7.** Elément d'étanchéité adhésif pour pile à combustible selon l'une quelconque des revendications 1 à 6, dans lequel l'élément d'étanchéité adhésif présente une température T2 d'essai de torsion de Gehman de -40°C ou moins.

【FIG. 1】

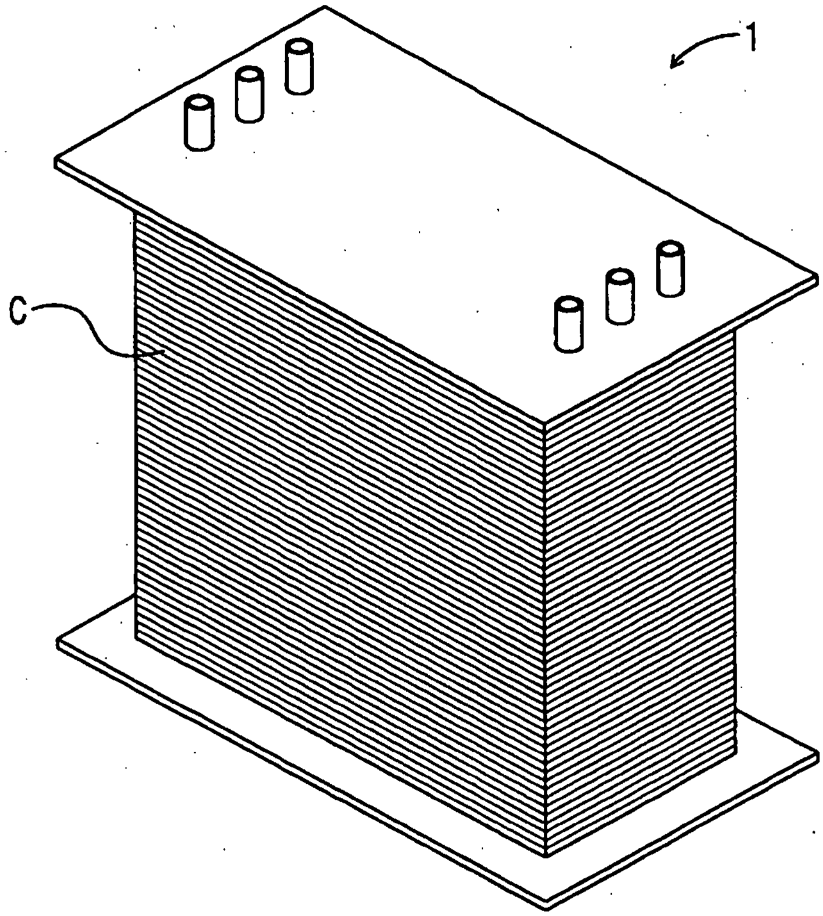

【FIG. 2】

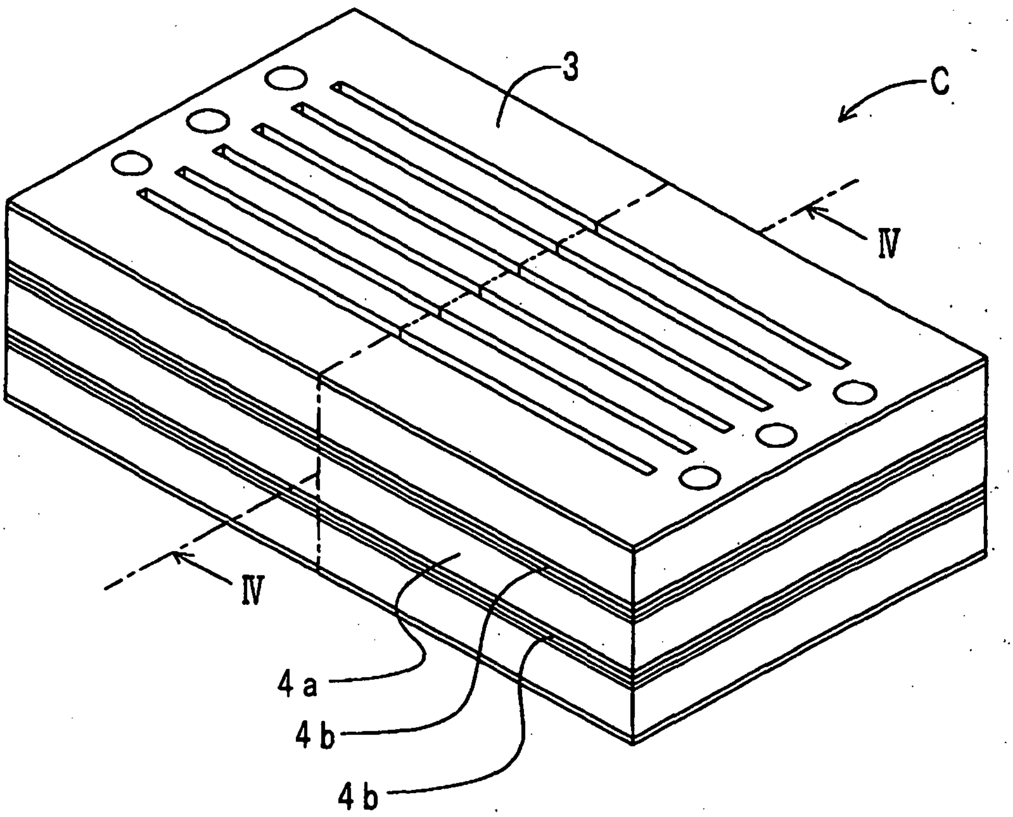

[F I G. 3]

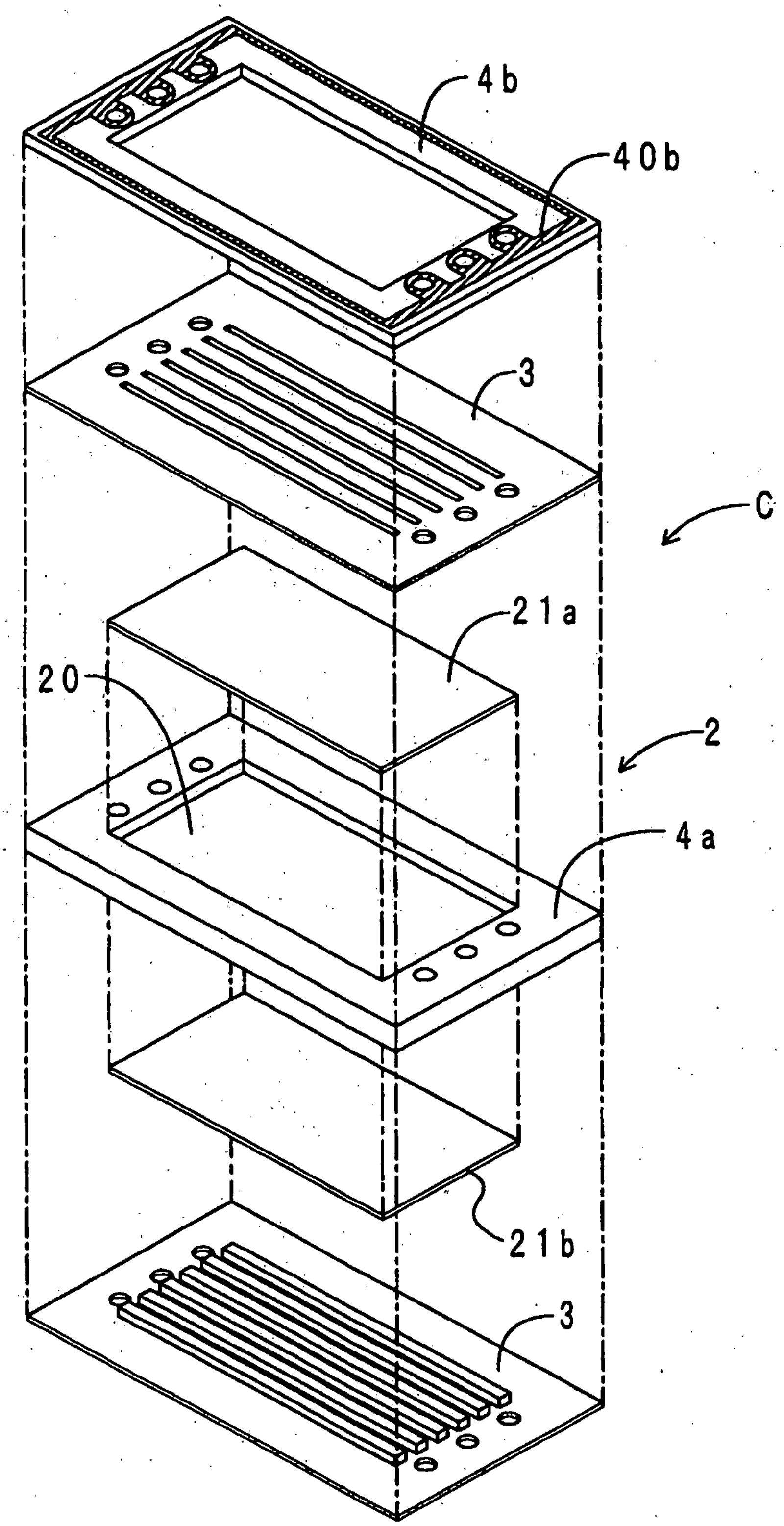

[FIG. 4]

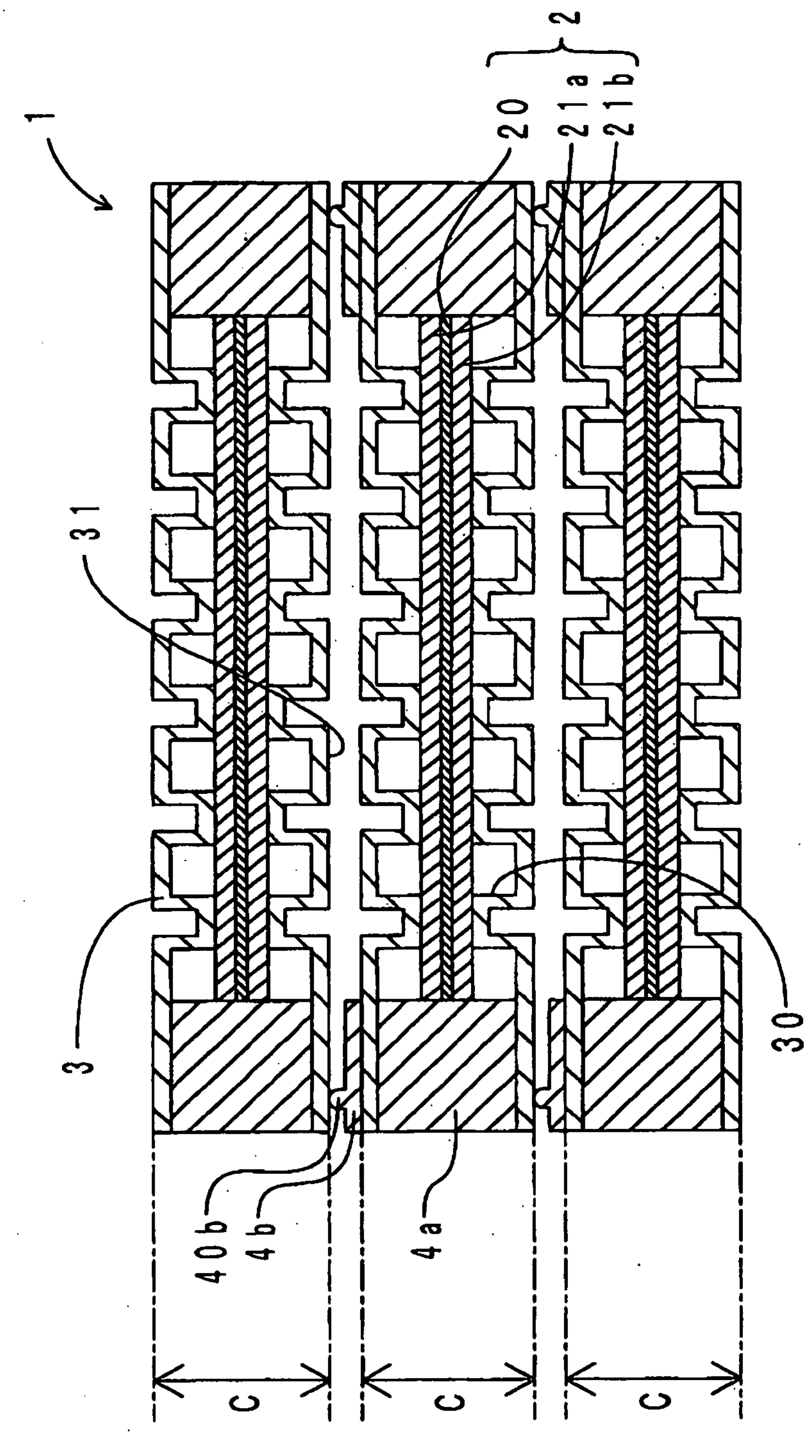

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009094056 A
- JP 2010146781 A
- JP 2004150591 A
- EP 0315363 A